# EUROPÄISCHE PATENTSCHRIFT

(11) **EP 1 108 174 B1**
(45) Veröffentlichungstag und Bekanntmachung des Hinweises auf die Patenterteilung: **30.06.2004**
(21) Anmeldenummer: 00943537.1
(22) Anmeldetag: 28.04.2000
(51) Int. Cl.: F16K 31/06, F02M 25/08

(54) **VENTIL**
VALVE
SOUPAPE

(30) Priorität: 18.06.1999 DE 19927906
(43) Veröffentlichungstag der Anmeldung: 20.06.2001
(73) Patentinhaber: ROBERT BOSCH GMBH, 70442 Stuttgart (DE)
(72) Erfinder: SCHULZ, Wolfgang, D-74321 Bietigheim-Bissingen (DE)
(86) Internationale Anmeldenummer: PCT/DE2000/001341
(87) Internationale Veröffentlichungsnummer: WO 2000/079163

(56) Entgegenhaltungen:
- EP-A- 0 722 061
- WO-A-98/08014
- FR-A- 2 641 334
- GB-A- 2 039 000
- US-A- 5 374 029

## Beschreibung

### Stand der Technik

Die Erfindung betrifft ein Ventil, insbesondere zur Tankentlüftung bei Kraftfahrzeugen nach der Gattung des Anspruchs 1.

Ein solches Ventil geht beispielsweise aus der DE 197 21 562 A1 sowie aus der DE 40 23 044 A1 hervor.

Solche Ventile dienen der Regenerierung von Adsorptionsfiltern für Brennstoffverdunstungs-Rückhaltesysteme des Brennstofftanks von Fahrzeugen. Problematisch bei derartigen Ventilen ist es, daß die Zentrierfeder bei hohen Schwingungsbeschleunigungen, die im Fahrzeug insbesondere bei einem Motoranbau auftreten, und großen Ventilhüben brechen kann. Die Bruchstelle liegt dabei in den meisten Fällen im Bereich der kurzen Federarme benachbart zu den Befestigungspunkten der Zentrierfeder an dem Ventilglied sowie an dem Ringspaltjoch.

Aufgabe der Erfindung ist es, ein Ventil der gattungsgemäßen Art so weiterzubilden, daß auch bei einem Motoranbau des Ventils und den damit verbundenen hohen Schwingungsbeschleunigungen Brüche der Zentrierfeder weitestgehend vermieden werden.

### Vorteile der Erfindung

Diese Aufgabe wird bei einem Ventil der eingangs beschriebenen Art erfindungsgemäß durch die Merkmale des Anspruchs 1 gelöst.

Es hat sich gezeigt, daß durch den mäanderförmig geschwungenen Verlauf der kurzen Federarme eine Bruchneigung der Zentrierfeder auch im Bereich der kurzen Federarme, benachbart zu den Befestigungspunkten an dem Ventilglied sowie an dem Rückschlußjoch erheblich verringert wird.

Darüber hinaus wird durch die Befestigung des Ventilglieds an dem Rückschlußjoch mittels der Zentrierfeder und der Ausbildung der Zentrierfeder eine besonders präzise und reibungslose Führung des Ventilglieds im Rückschlußjoch/Ringspaltjoch ermöglicht und ein Verkanten während des getakteten Betriebs des Ventils wirkungsvoll verhindert. Ohne eine solche Zentrierfeder wäre eine ordnungsgemäße Ventilfunktion nicht möglich, da bei einem Verkanten des als Magnetanker wirkenden Ventilglieds im Ringspaltjoch an der Stelle der Verkantung eine magnetische Sättigung erfolgte, die eine gleichmäßige Arbeitsbewegung des Ventilglieds verhindern würde.

Bei einer vorteilhaften Ausführungsform ist vorgesehen, daß die kurzen Federarme S-förmig geschwungen verlaufen.

Die Befestigung der Zentrierfeder an dem Ventilglied sowie an dem Rückschlußjoch erfolgt vorteilhafterweise durch Nietverbindungen.

### Zeichnung

Weitere Vorteile und Merkmale der Erfindung sind Gegenstand der nachfolgenden Beschreibung sowie der zeichnerischen Darstellung der Ausführungsbeispiele.

In der Zeichnung zeigen:
- Fig. 1: schematisch einen Längsschnitt durch ein aus dem Stand der Technik bekanntes Ventil;
- Fig. 2: in perspektivischer Darstellung die Befestigung des Ventilglieds an einem Rückschlußjoch durch eine Zentrierfeder bei einem aus dem Stand der Technik bekannten Ventil;
- Fig. 3: eine Draufsicht einer erfindungsgemäßen Zentrierfeder und
- Fig. 4: in perspektivischer Darstellung ein Rückschlußjoch und ein an ihm mittels der in Fig. 3 dargestellten Zentrierfeder befestigtes Ventilglied.

### Beschreibung der Ausführungsbeispiele

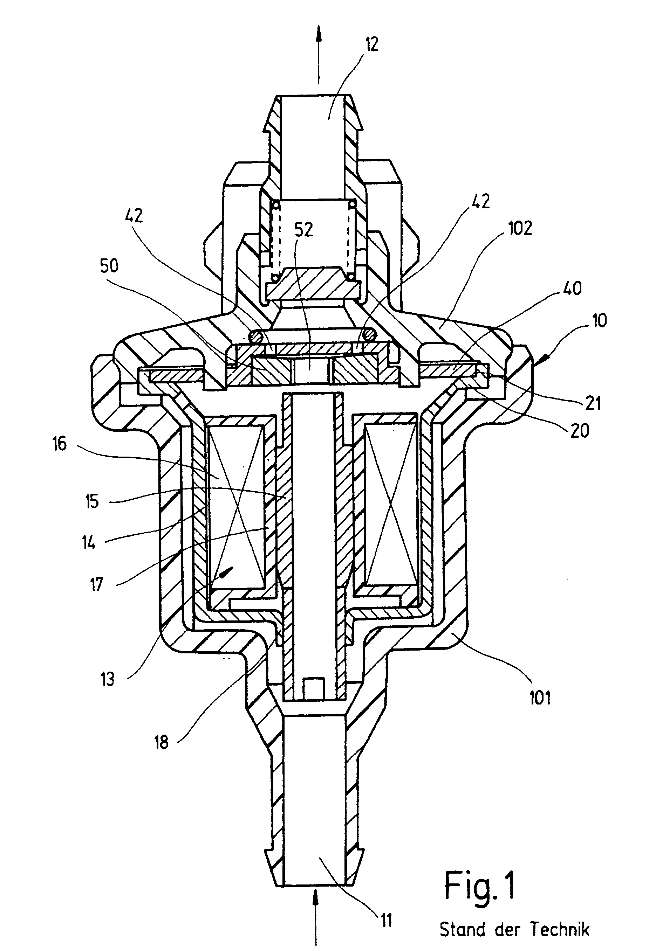

Ein aus dem Stand der Technik bekanntes, in Fig. 1 im Längsschnitt dargestelltes Tankentlüftungsventil als Ausführungsbeispiel für ein beliebiges Magnetventil, dient zum dosierten Zumischen von aus dem Brennstofftank einer (nicht dargestellten) gemischverdichtenden fremdgezündeten Brennkraftmaschine verflüchtigten Brennstoff in die Brennkraftmaschine, z.B. in ein Ansaugrohr oder bei einer Benzindirekteinspritzung direkt in einen Zylinder der Brennkraftmaschine und ist Teil eines nicht näher dargestellten Brennstoffverdunstungs-Rückhaltesystems einer Brennkraftmaschine. Der Aufbau und die Funktion derartiger Brennstoffverdunstungs-Rückhaltesysteme ist beispielsweise der "Bosch Technische Unterrichtung Motormanagement Motronic", 2. Ausgabe, August 1993, Seiten 48 und 49 entnehmbar. Ein Tankentlüftungsventil und dessen Funktion geht beispielsweise aus der DE 197 21 562 A1 sowie der DE 196 11 886 A1 oder der DE 40 23 044 A1, auf die vorliegend Bezug genommen wird, hervor.

Ein Tankentlüftungsventil weist ein zweiteiliges Ventilgehäuse 10 mit einem topfförmigen Gehäuseteil 101 und einem diesen abschließenden, kappenförmigen Gehäuseteil 102 auf. Der Gehäuseteil 101 trägt einen Zuströmstutzen 11 zum Anschließen an einen Entlüftungsstutzen des Brennstofftanks oder an einen diesem nachgeschalteten, mit Aktivkohle gefüllten Speicher für den verflüchtigten Brennstoff. Der Gehäuseteil 102 trägt einen Abströmstutzen zum Anschließen an das Ansaugrohr der Brennkraftmaschine. Der Zuströmstutzen 11 und der Abströmstutzen 12 sind miteinander fluchtend jeweils axial in den Gehäuseteilen 101, 102 angeordnet. Im Inneren des topfförmigen Gehäuseteils 101 ist ein Elektromagnet 13 angeordnet.

Der Elektromagnet 13 weist ein topfförmiges Magnetgehäuse 14 mit einem den Topfboden durchdringenden, koaxialen, hohlzylindrischen Magnetkern 15 und eine zylindrische Erregerspule 16 auf, die auf einem Spulenträger 17 sitzt, der im Magnetgehäuse 14 den Magnetkern 15 umschließt. Am Boden des Magnetgehäuses 14 ist ein nach außen vorspringender Gewindestutzen 18 mit einem Innengewinde ausgebildet, das mit einem Außengewindeabschnitt des hohlzylindrischen Magnetkerns 15 verschraubt ist. Der Magnetkern 15 kann damit durch Drehen im Magnetgehäuse 14 zu Justierzwecken axial verschoben werden. Der Magnetkern wird am Gewinde umlaufend mit Kunststoff beschichtet, um Gewindetoleranzen am Magnetkern 15 und/oder am Gewindestutzen 18 auszugleichen und, um eine Dejustierung im Fahrzeug zu verhindern. Der Magnetkern 15 fluchtet mit dem Zuströmstutzen 11, so daß der hier einströmende, verflüchtigte Brennstoff direkt den Magnetkern 15 durchströmt.

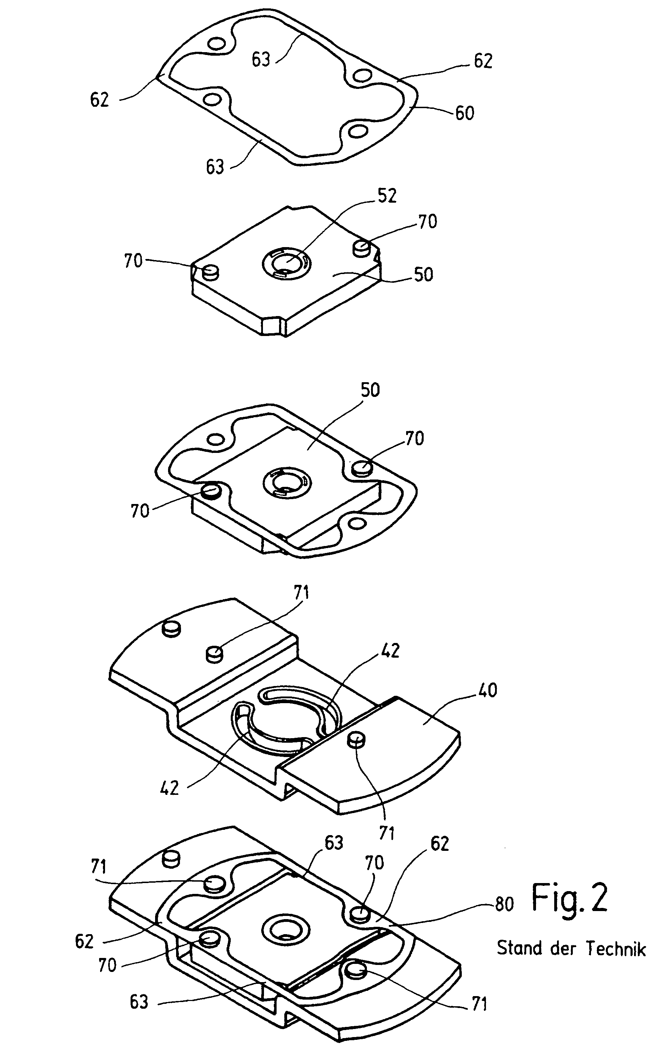

Der Rand des Magnetgehäuses 14 ist nach außen zu einem ringförmigen Auflageflansch 20 abgewinkelt, der endseitig zu einem axial vorstehenden Ringsteg 21 umgebogen ist. Im Auflageflansch 20 ist ein das Rückschlußjoch 40 des Elektromagneten 13 bildender Ventilsitzkörper aufgenommen, der das Magnetgehäuse 14 abdeckt und randseitig an dem Ringsteg 21 anliegt. Wie insbesondere aus Fig. 2 hervorgeht, sind in dem Ringspaltjoch oder Rückschlußjoch 40 symmetrische, im wesentlichen halbkreisförmige Bogenspalte 42 als Ventilöffnungen angeordnet, die mittels eines zwischen dem Rückschlußjoch 40 und dem Magnetkern 15 angeordneten Ventilgliedes 50, welches die Funktion eines Magnetankers aufweist, verschließbar sind. Zentral im Ventilglied 50 ist koaxial zum hohlzylindrischen Magnetkern 15 eine axiale Durchgangsöffnung 52 angeordnet, durch die vom Zuströmstutzen 11 herkommender, verflüchtigter Brennstoff bei geöffneten Ventilöffnungen 42 zum Abströmstutzen 12 gelangen kann. Das aus magnetisch leitendem Material hergestellte Ventilglied 50 ist durch eine blattfederförmige Zentrierfeder 60 an dem Ringspaltjoch 40 durch Nietverbindungen 70, 71 befestigt, wobei jeweils zwei Nietverbindungen 70 auf dem Ventilglied 50 und zwei weitere Nietverbindungen 71 auf dem Ringspaltjoch 40 angeordnet sind. Die Zentrierfeder 60 weist zwei kurze Federarme 62 sowie zwei lange Federarme 63 auf, die jeweils die Verbindung zu den Nietverbindungen 70 bzw. 71 darstellen.

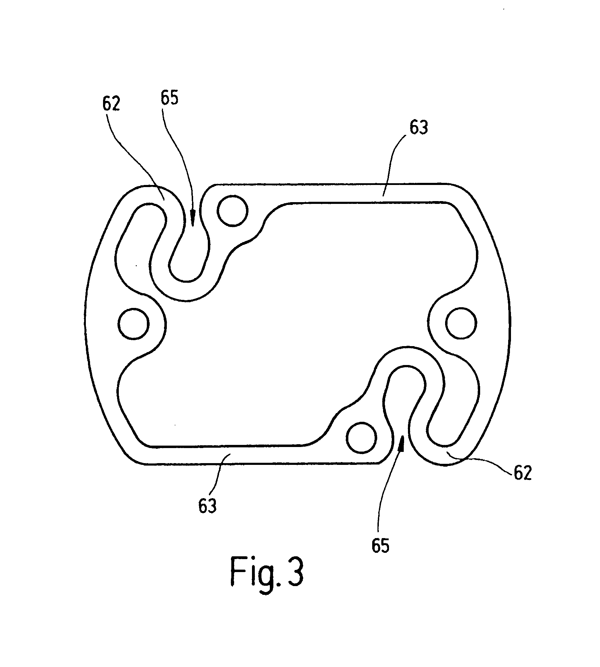

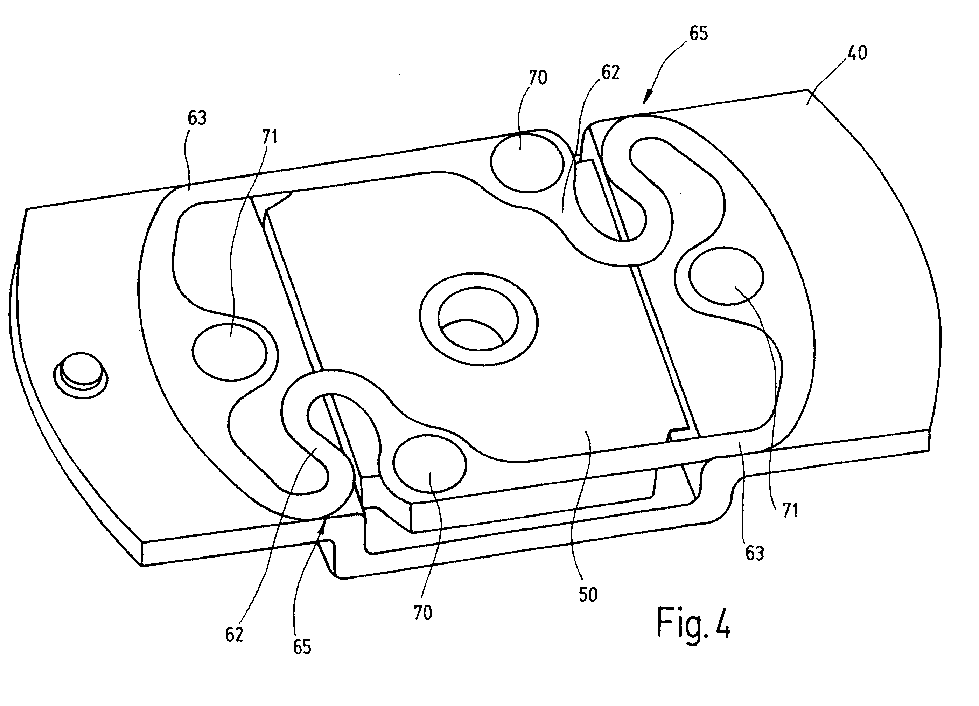

Aufgrund der Belastung des Ventils durch Schwingungsbeschleunigungen, wie sie besonders bei einem Motoranbau des Ventils auftreten, können Bruchstellen auftreten, die insbesondere benachbart zu den Befestigungspunkten 70 an den kurzen Federarmen 62 lokalisiert sind. Um diese Bruchstellen zu vermeiden, weisen die kurzen Federarme 62 mäanderförmig geschwungene, beispielsweise wie in Fig. 3 und 4 dargestellt, S-förmig geschwungene Bögen 65 auf. Durch diese Verlängerung der kurzen Federarme 62 wird zum einen ein deutlich größerer Arbeitshub für größere Luftdurchsätze erreicht, zum anderen kann eine derartige Zentrierfeder 60 größeren Schwingungsbeschleunigungen in Querrichtungen ausgesetzt werden, da diese Schwingungen in den S-förmig geschwungenen Bögen 65 besonders vorteilhaft abklingen können. Darüber hinaus ermöglicht eine derartige Zentrierfeder 60 eine reibungslose Lagerung des Ventilglieds 50 im Rückschlußjoch/Ringspaltjoch 40 und verhindert insbesondere ein Verkanten während eines getakteten Betriebs des Ventils und eine dadurch hervorgerufene magnetische Sättigung, die eine gleichmäßige Arbeitsbewegung des ventilglieds 50 verhindert.

## Patentansprüche

1. Ventil, insbesondere zur Tankentlüftung bei Kraftfahrzeugen, mit einem Rückschlußjoch (40), mit wenigstens einer Ventilöffnung (42) und mit einem zur Freigabe und zum Verschließen der wenigstens einen ventilöffnung (42) zusammenwirkenden, federbelasteten Ventilglied (50), das einen Magnetanker. eines Elektromagneten (13) bildend, zwischen dem Rückschlußjoch (40) des Elektromagneten (13) und einem Magnetkern (15) des Elektromagneten (13) angeordnet ist, wobei das Ventilglied (50) mittels einer Zentrierfeder (60) an dem Rückschlußjoch (40) befestigt ist, welche an jeweils wenigstens zwei Befestigungspunkten (70) an dem Ventilglied (50) und wenigstens zwei Befestigungspunkten (71) an dem Rückschlußjoch befestigt ist und wenigstens zwei kurze Federarme (62) und wenigstens zwei lange Federarme (63) jeweils zwischen einem Befestigungspunkt (70) an dem Ventilglied und einem Befestigungspunkt (71) an dem Rückschlußjoch aufweist, **dadurch gekennzeichnet, daß** die kurzen Federarme (62) mäanderförmig geschwungen verlaufen.

2. Ventil nach Anspruch 1, **dadurch gekennzeichnet, daß** die kurzen Federarme (62) S-förmig geschwungen verlaufen.

3. Ventil nach Anspruch 1 oder 2, **dadurch gekennzeichnet, daß** die Zentrierfeder (60) an dem Rückschlußjoch (40) und an dem Ventilglied (50) durch Nietverbindungen befestigt ist.

## Claims

1. Valve, in particular for tank ventilation in motor vehicles, having a return yoke (40) having at least one valve opening (42) and having a spring-loaded valve element (50) which interacts for the purpose of opening up and for closing the at least one valve opening (42) and which is arranged, forming a magnet armature of an electromagnet (13), between the return yoke (40) of the electromagnet (13) and a magnet core (15) of the electromagnet (13), the valve element (50) being fastened by means of a centring spring (60) to the return yoke (40) which is fastened at in each case at least two fastening points (70) to the valve element (50) and at at least two fastening points (71) to the return yoke and has at least two short spring arms (62) and at least two long spring arms (63) in each case between a fastening point (70) on the valve element and a fastening point (71) on the return yoke, **characterized in that** the short spring arms (62) have a profile curved in meandering form.

2. Valve according to Claim 1, **characterized in that** the short spring arms (62) have a profile curved in an S shape.

3. Valve according to Claim 1 or 2, **characterized in that** the centring spring (60) is fastened to the return yoke (40) and to the valve element (50) by rivet connections.

## Revendications

1. Soupape, notamment soupape de ventilation de réservoir de véhicule automobile, comportant une culasse de retour de flux (40), au moins un orifice de soupape (42) avec un clapet (50) chargé par ressort, coopérant avec au moins cet orifice de soupape (42), et formant l'induit d'un électro-aimant (13) en étant placé entre la culasse de retour de flux (40) de l'électro-aimant (13) et le noyau magnétique (15) de l'électro-aimant (13),
le clapet (50) étant fixé à la culasse (40) par un ressort de centrage (60) fixé à chaque fois par au moins deux points de fixation (70) au clapet (580) et par au moins deux points de fixation (71) à la culasse, et ayant au moins deux bras de ressort courts (62) et au moins deux bras de ressort longs (63) chaque fois entre un point de fixation (70) du clapet et un point de fixation (71) de la culasse,
**caractérisée en ce que**
les bras de ressort courts (62) sont courbés en forme de méandre.

2. Soupape selon la revendication 1,
**caractérisée en ce que**
les bras de ressort courts (62) sont courbés en forme de S.

3. Soupape selon la revendication 1 ou 2,
**caractérisée en ce que**
le ressort de centrage (60) est fixé à la culasse de retour de flux (40) et au clapet (50) par des rivets.
